# EUROPÄISCHE PATENTSCHRIFT

(11) **EP 2 434 429 B1**
(45) Veröffentlichungstag und Bekanntmachung des Hinweises auf die Patenterteilung: **04.03.2015**
(21) Anmeldenummer: 11007394.7
(22) Anmeldetag: 09.09.2011
(51) Int. Cl.: G06K 7/00, G06K 19/073, G06F 3/06, G06F 12/08, G06F 9/50, G06F 9/30, G06F 9/445

(54) **Chipkarte mit integriertem Schaltkreis**
Chip card with integrated circuit
Carte à puce dotée d'un circuit intégré

(30) Priorität: 22.09.2010 DE 102010046266
(43) Veröffentlichungstag der Anmeldung: 28.03.2012
(73) Patentinhaber: Deutsche Telekom AG, 53113 Bonn (DE)
(72) Erfinder: Moos, Rainer, 57080 Siegen (DE); Breuer, Jörg, 57223 Kreuztal (DE)
(74) Vertreter: Klinski, Robert

(56) Entgegenhaltungen:
- DE-A1-102005 029 887
- DE-A1-102005 061 662
- DE-A1-102008 015 034
- DE-A1-102009 026 178
- DE-A1-102009 032 821
- DE-C1- 10 139 889
- US-A1- 2008 314 974
- US-B1- 6 478 222

## Beschreibung

### TECHNISCHES GEBIET

Die vorliegende Erfindung betrifft das Gebiet der Chipkarten mit integrierten Schaltkreisen.

### TECHNISCHER HINTERGRUND

Zur Identifizierung und Authentifizierung von Benutzern gegenüber einer Datenverarbeitungsvorrichtung werden oft Chipkarten als so genannte Sicherheitstoken eingesetzt, welche nach dem ISO 7816-Standard eingerichtet sind. Zum Betrieb derartiger Chipkarten verwendet die Datenverarbeitungsvorrichtung einen Chipkarten-spezifischen Treiber, welcher als Computerprogramm üblicherweise durch einen Benutzer anhand eines Installationshandbuchs zu installieren ist. Dies kann zu einem erhöhten Installationsaufwand führen.

Die Installation des Chipkarten-spezifischen Treibers ist deswegen notwendig, weil oft sowohl die Struktur als auch die Funktionsweise einer Chipkarte hersteller- bzw. anwendungsspezifisch sind. Der Chipkarten-spezifische Treiber bildet die speziellen Funktionen der Chipkarte auf Funktionen ab, welche der Datenverarbeitungsvorrichtung bekannt sind, wodurch ein ordnungsgemäßer Betrieb der Chipkarte sichergestellt werden kann.

Unter den Funktionen bekannter Chipkarten ist die Ausführung unterschiedlicher Sicherheitsdienste wie Authentifizierung, Identifizierung, Sicherstellung der Vertraulichkeit oder Signatur auf der Basis von kryptografischen Verfahren zu nennen. Hierzu umfassen nach dem ISO 7816-Standard eingerichtete Chipkarten integrierte Schaltkreise, welche als Träger kryptografischer Schlüssel oder zur Ausführung kryptografischer Verfahren eingesetzt werden.

Zum Betrieb einer Chipkarte an einer Datenverarbeitungsvorrichtung wird üblicherweise ein Chipkarten-Terminal eingesetzt, welches eine Kommunikation zwischen der Datenverarbeitungsvorrichtung und der Chipkarte beispielsweise auf der Basis von Application Protocol Data Units (APDUs) sowie Response APDUs gemäß dem ISO 7816-Standard ermöglicht. Diese Kommunikation ist jedoch erst nach der Installation des Chipkarten-spezifischen Treibers möglich.

Die Druckschrift DE 10 2005 029 887 A1 betrifft ein Verfahren zum Sicherstellen der Datenintegrität eines portablen Datenträgers und einen solchen Datenträger, insbesondere eine Chipkarte, Smart-Card, Massenspeicherkarte, Multimediakarte oder ein USB-fähiges Speichermedium.

### ZUSAMMENFASSUNG

Es ist daher die Aufgabe der vorliegenden Erfindung, ein Konzept zum effizienten Betreiben einer Chipkarte an einer Datenverarbeitungsvorrichtung zu schaffen.

Diese Aufgabe wird durch die Merkmale der unabhängigen Ansprüche gelöst. Weitere Ausführungsformen der Erfindung sind Gegenstand der abhängigen Ansprüche.

Die Erfindung ist in den unabhängigen Ansprüchen definiert und basiert auf der Erkenntnis, dass eine Chipkarte effizient an einer Datenverarbeitungsvorrichtung betrieben werden kann, wenn die Chipkarte als Datenlaufwerk, das die Datenverarbeitungsvorrichtung erkennen kann, angemeldet werden kann. Somit kann die Datenverarbeitungsvorrichtung unabhängig von einem eventuell benötigten, speziellen Treiber hersteller- und strukturunabhängig zunächst auf die Chipkarte zugreifen. Das Datenlaufwerk der Chipkarte kann beispielsweise eine ausführbare Datei bereitstellen, welche selbst der zum Betrieb der Chipkarte benötigte Treiber ist oder welche bei Ausführung eine Internetverbindung zu einem entfernten Kommunikationsserver aufbaut, der den Treiber bereitstellt oder diesen auf der Datenverarbeitungsvorrichtung automatisch installiert.

Die abhängigen Ansprüche definieren bevorzugte Ausführungsformen.

Gemäß einem Aspekt betrifft die Erfindung eine Chipkarte mit einem integrierten Schaltkreis, einem Speicher und einer Kommunikationsschnittstelle, wobei der Speicher eine Partition aufweist, welche über die Kommunikationsschnittstelle erreichbar ist. Der integrierte Schaltkreis kann beispielsweise als Träger eines kryptografischen Schlüssels und/oder zur Ausführung eines kryptografischen Verfahrens, beispielsweise zur Identifizierung oder Authentifizierung der Chipkarte gegenüber einer Datenverarbeitungsvorrichtung, vorgesehen sein. Die Kommunikationsschnittstelle kann beispielsweise eine Eingangs- und Ausgangsschnittstelle (I/O) sein, welche eine Kommunikation zwischen der Chipkarte und der Datenverarbeitungsvorrichtung beispielsweise über ein Chipkarten-Terminal ermöglicht. Die Kommunikationsschnittstelle kann jedoch eine USB-Schnittstelle (USB: Universal Serial Bus) oder eine Funkschnittstelle, insbesondere eine RFID-Schnittstelle (RFID: Radio Frequency Identification), sein. Die Partition des Speichers ist beispielsweise ein zusammenhängender Speicherbereich und ist beispielsweise als Datenlaufwerk eingerichtet. Somit kann die Partition von jedem beliebigen Betriebssystem einer Datenverarbeitungsvorrichtung, an die die Chipkarte angeschaltet wird, wie ein physikalisches Datenlaufwerk erkannt bzw. behandelt werden. Darüber hinaus kann der Speicher mehrere derartige Partitionen aufweisen, welche beispielsweise unabhängig voneinander sind.

Zur Definition der Partition kann beispielsweise eine Partitionstabelle des Speichers vorgesehen sein, welche Informationen über einen Beginn, eine Länge, eine Bootfähigkeit oder einen Typ des Dateisystems der Partition aufweist. Zur Erstellung oder Konfiguration der Partition können an sich bekannte Partitionierungskonzepte eingesetzt werden.

Die Partition des Speichers ist beispielsweise als logisches Datenlaufwerk eingerichtet, das von einem Betriebssystem der Datenverarbeitungsvorrichtung wie ein physikalisches Datenlaufwerk erkannt oder behandelt werden kann. Somit kann die Datenverarbeitungsvorrichtung, an welche die Chipkarte angeschaltet ist, unter Verwendung von an sich bekannten Standardzugriffsverfahren auf die Partition zugreifen, um beispielsweise darin gespeicherte Daten auszulesen.

Gemäß einer Ausführungsform ist die Partition als ein beschreibbares und lesbares Datenlaufwerk, insbesondere logisches Datenlaufwerk, eingerichtet. Zur Einrichtung der Partition als Datenlaufwerk können an sich bekannte, beispielsweise Betriebssystem-abhängige, Partitionierungskonzepte eingesetzt werden.

Gemäß einer Ausführungsform ist die Kommunikationsschnittstelle zur Kommunikation zwischen der Chipkarte und einer externen Datenverarbeitungsvorrichtung vorgesehen. Die Kommunikation kann beispielsweise ISO 7816-konform sein und/oder auf der Basis eines PC/SC-Protokolls (PC/SC: Personal Computer/Smart Card) durchgeführt werden. Die Kommunikationsschnittstelle kann jedoch auch zur Kommunikation gemäß anderen Standards eingesetzt werden, welche die diesbezügliche Funktionalität des ISO 7816-Standards definieren.

Gemäß einer Ausführungsform ist die Kommunikationsschnittstelle ausgebildet, eine Anfrage zu empfangen, ob die Chipkarte die Partition aufweist. Die Anfrage kann beispielsweise eine APDU-Anfrage sein, welche die Partition gezielt adressiert. Hierzu kann die Partition beispielsweise eine feste Adresse und/oder eine Alias-Bezeichnung aufweisen, welche deren Identifizierung ermöglicht. Die Anfrage kann beispielsweise von einer externen Datenverarbeitungsvorrichtung stammen, mit welcher die Chipkarte über beispielsweise ein Chipkarten-Terminal oder unmittelbar verbunden ist. Die Anfrage kann in der Gestalt eines elektrischen Signals vorliegen, welches von der Chipkarte empfangen wird. Ansprechend auf die empfangene Anfrage kann die Kommunikationsschnittstelle ausgebildet sein, eine Bestätigung auszusenden, die das Vorhandensein der Partition bestätigt. Ist die Chipkarte nach dem ISO 7816-Standard eingerichtet, so kann die Bestätigung die "9000"-Nachricht sein. Auf diese Weise kann sichergestellt werden, dass die Datenverarbeitungsvorrichtung beispielsweise bei einer Erstanwendung der Chipkarte verifizieren kann, dass die Chipkarte einen Speicher mit einer Partition aufweist, auf welche über die Kommunikationsschnittstelle zugegriffen werden kann. Durch das Aussenden der Bestätigung, beispielsweise in der Gestalt eines elektrischen Signals, gibt die Chipkarte zu erkennen, dass sie die Partition aufweist, welche durch die Datenverarbeitungsvorrichtung als physikalisches Datenlaufwerk eingebunden werden kann.

Gemäß einer Ausführungsform ist die Partition konfigurierbar, insbesondere einrichtbar oder löschbar. Zur Konfigurierung der Partition können an sich bekannte Partitionierungsprogramme eingesetzt werden, welche an das Betriebssystem der Datenverarbeitungsvorrichtung angepasst sind. Durch eine Löschung der Partition wird der partitionierte Speicherbereich wieder frei.

Gemäß einer Ausführungsform ist die Chipkarte eine ISO 7816-konforme Chipkarte. Allgemein kann die Chipkarte eine Smartcard oder eine ICC (Integrated Circuit Card) sein.

Gemäß einer Ausführungsform umfasst die Partition eine ausführbare Datei. Bevorzugt ist die Kommunikationsschnittstelle ausgebildet, ansprechend auf den Empfang eines Lesezugriffs von beispielsweise einer Datenverarbeitungsvorrichtung eine Kopie der ausführbaren Datei auszusenden, beispielsweise an die Datenverarbeitungsvorrichtung auszusenden. Die Datenverarbeitungsvorrichtung kann daraufhin die Kopie der ausführbaren Datei ausführen, um beispielsweise einen Treiber zum Betrieb der Chipkarte zu installieren oder um beispielsweise eine Verbindung über ein Kommunikationsnetzwerk wie beispielsweise Internet zu einem entfernten Kommunikationsserver aufzubauen, welcher den Treiber bereitstellt.

Gemäß einem weiteren Aspekt betrifft die Erfindung ein Verfahren zum Betreiben einer Chipkarte, beispielsweise der erfindungsgemäßen Chipkarte, an einer Datenverarbeitungsvorrichtung, beispielsweise an einem Computersystem. Die Chipkarte umfasst einen Speicher und einen integrierten Schaltkreis. Das Verfahren umfasst das Aussenden einer Anfrage an die Chipkarte durch die Datenverarbeitungsvorrichtung bei einer Verbindung, insbesondere bei Erkennen einer Verbindung durch die Datenverarbeitungsvorrichtung oder durch ein Chipkarten-Terminal, zwischen der Chipkarte und der Datenverarbeitungsvorrichtung, um festzustellen, ob der Speicher eine Partition aufweist. Die Verbindung zwischen der Chipkarte und der Datenverarbeitungsvorrichtung kann beispielsweise mithilfe eines Chipkarten-Terminals realisiert werden. Die Verbindung kann auf der Basis von an sich bekannten Erkennungsmechanismen erfolgen, welche beispielsweise auf dem PC/SC-Protokoll basieren.

Gemäß einer Ausführungsform umfasst das Verfahren das Aussenden einer Bestätigung von der Chipkarte an die Datenverarbeitungsvorrichtung ansprechend auf die empfangene Anfrage. Die Bestätigung kann beispielsweise eine "9000"-Nachricht gemäß dem ISO 7618-Standard sein.

Gemäß einer Ausführungsform umfasst das Verfahren das Einrichten einer Partition eines Speichers der Chipkarte als Datenlaufwerk durch die Datenverarbeitungsvorrichtung. Die Partition kann beispielsweise als logisches Datenlaufwerk eingerichtet und durch die Datenverarbeitungsvorrichtung als physikalisches Datenlaufwerk eingebunden werden.

Gemäß einer Ausführungsform umfasst das Verfahren das Auslesen einer ausführbaren Datei aus einer Partition eines Speicherbereichs der Chipkarte durch die Datenverarbeitungsvorrichtung und das Ausführen der ausführbaren Datei durch die Datenverarbeitungsvorrichtung. Das Auslesen kann beispielsweise nach einer Einbindung der Partition als Datenlaufwerk durch die Datenverarbeitungsvorrichtung erfolgen, so dass die Datenverarbeitungsvorrichtung auf die in der Partition gespeicherte, ausführbare Datei zugreifen kann. Das Auslesen kann beispielsweise mittels eines Lesezugriffs erfolgen, wobei zur Ausführung der ausführbaren Datei insbesondere eine automatische Computerroutine beispielsweise durch ein Betriebssystem der Datenverarbeitungsvorrichtung gestartet werden kann. Die ausführbare Datei kann einen Treiber zum Betreiben der Chipkarte umfassen, so dass beim Ausführen der ausführbaren Datei der Treiber in der Datenverarbeitungsvorrichtung installiert wird. Beim Ausführen der ausführbaren Datei kann jedoch eine Kommunikationsverbindung über ein Kommunikationsnetzwerk zu einem entfernten Kommunikationsserver aufgebaut werden, welcher den Treiber bereitstellt oder automatisch installiert. Die Zieladresse kann beispielsweise in der Gestalt eines URLs (Uniform Ressource Locator) durch die ausführbare Datei bereitgestellt werden.

Weitere Verfahrensmerkmale ergeben sich unmittelbar aus der Funktionalität der erfindungsgemäßen Chipkarte und/oder aus der Funktionalität der im Folgenden beschriebenen Datenverarbeitungsvorrichtung.

Gemäß einem weiteren Aspekt betrifft die Erfindung ein Computerprogramm zum Ausführen des erfindungsgemäßen Verfahrens zum Betreiben einer Chipkarte, wenn das Computerprogramm durch eine Datenverarbeitungsvorrichtung, beispielsweise durch ein Computersystem, ausgeführt wird.

Gemäß einem weiteren Aspekt betrifft die Erfindung eine Datenverarbeitungsvorrichtung zur Kommunikation mit der erfindungsgemäßen Chipkarte. Die Datenverarbeitungsvorrichtung umfasst einen Anschluss, mit welchem die Chipkarte verbindbar ist, und einen Prozessor, welcher ausgebildet ist, bei einer Verbindung zwischen der Chipkarte mit dem Anschluss eine Anfrage an die Chipkarte auszusenden, ob ein Speicher der Chipkarte eine Partition aufweist. Hierzu kann die Datenverarbeitungsvorrichtung beispielsweise einen Sender umfassen, welcher die Anfrage über den Anschluss an die Chipkarte aussendet. Die Chipkarte kann mit dem Anschluss beispielsweise über ein Chipkarten-Terminal verbunden werden. Alternativ kann die Chipkarte einen USB-Anschluss aufweisen, welcher mit dem Anschluss verbunden werden kann. Darüber hinaus kann die Chipkarte beispielsweise zur drahtlosen Kommunikation eingerichtet sein. In diesem Fall kann der Anschluss der Datenverarbeitungsvorrichtung beispielsweise eine drahtlose Kommunikationsschnittstelle sein. Zum Erkennen der Verbindung zwischen der Chipkarte und dem Anschluss können beispielsweise an sich bekannte PC/SC-Mechanismen verwendet werden.

Gemäß einer Ausführungsform ist der Prozessor ausgebildet, bei Empfang einer Bestätigung von der Chipkarte ansprechend auf die Anfrage, die Partition als Datenlaufwerk, insbesondere als physikalisches Datenlaufwerk, einzubinden oder auf die Partition zuzugreifen.

Gemäß einer Ausführungsform ist die Datenverarbeitungsvorrichtung eingerichtet, insbesondere programmtechnisch eingerichtet, das erfindungsgemäße Computerprogramm zum Ausführen des erfindungsgemäßen Verfahrens zum Betreiben der Chipkarte auszuführen.

Weitere Merkmale der Datenverarbeitungsvorrichtung ergeben sich unmittelbar aus den Merkmalen des Verfahrens zum Betreiben der Chipkarte.

### FIGURENBESCHREIBUNG

Weitere Ausführungsbeispiele werden Bezug nehmend auf die beiliegenden Zeichnungen näher erläutert. Es zeigen:
Fig. 1 ein Blockdiagramm eines Datenverarbeitungssystems mit einer Chipkarte und einer Datenverarbeitungsvorrichtung gemäß einem Ausführungsbeispiel;
Fig. 2 ein Ablaufdiagramm eines Verfahrens zum Betreiben einer Chipkarte gemäß einem Ausführungsbeispiel; und
Fig. 3 ein Blockdiagramm eines Datenverarbeitungssystems mit einer Chipkarte und einer Datenverarbeitungsvorrichtung gemäß einem weiteren Ausführungsbeispiel.

### DETAILIERTE BESCHREIBUNG

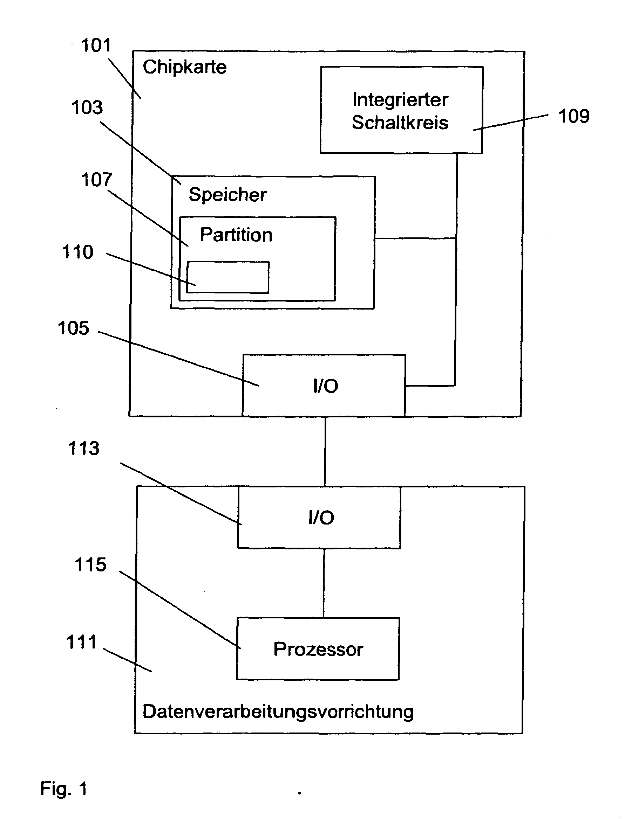

Fig. 1 zeigt ein Ausführungsbeispiel einer Chipkarte 101, welche einen Speicher 103 und eine Kommunikationsschnittstelle 105 (I/O: Input/Output) zur externen Kommunikation der Chipkarte 101 aufweist. Der Speicher 103 umfasst eine Partition 107, welche über die Kommunikationsschnittstelle 105 erreichbar ist. Die Chipkarte 101 umfasst ferner einen integrierten Schaltkreis 109, welcher beispielsweise als Träger eines kryptografischen Schlüssels oder zur Ausführung eines kryptografischen Verfahrens zur Authentifizierung oder Identifizierung der Chipkarte 101 beispielsweise gegenüber einer Datenverarbeitungsvorrichtung vorgesehen ist. Die Partition 105 kann beispielsweise eine ausführbare Datei 110 bereitstellen.

Fig. 1 zeigt ferner eine Datenverarbeitungsvorrichtung 111, welche beispielsweise einen Anschluss 113 (I/O: Input/Output) aufweist, mit dem die Kommunikationsschnittstelle 105 der Chipkarte 101 verbindbar ist. Hierzu kann beispielsweise ein in Fig. 1 nicht dargestelltes Chipkarten-Terminal, insbesondere ein Chipkartenlesegerät nach dem ISO 7816-Standard, eingesetzt werden. Die Kommunikationsschnittstelle 105 sowie der Anschluss 113 können ferner als unmittelbar miteinander verbindbare USB-Schnittstellen ausgebildet sein. Darüber hinaus kann die Kommunikationsschnittstelle 105 mit dem Anschluss 113 drahtlos kommunizieren. In diesem Fall können die Kommunikationsschnittstelle 105 sowie der Anschluss 113 Infrarot-Schnittstellen oder Funkschnittstellen aufweisen oder sein. Die Datenverarbeitungsvorrichtung 111 kann ferner einen Prozessor 115 umfassen, welcher ausgebildet ist, die Anfrage an die Chipkarte 101 auszusenden, um festzustellen, ob der Speicher 103 der Chipkarte 101 die Partition 107 aufweist. Die Einbindung der Partition 107 als Datenträger in ein Datenträgerverzeichnis kann beispielsweise mittels des Prozessors 115 erfolgen.

Die Chipkarte 101 sowie die Datenverarbeitungsvorrichtung 111 können gemäß einem Ausführungsbeispiel ein Datenverarbeitungssystem bilden.

Die Chipkarte 101 kann beispielsweise nach dem ISO 7816-Standard eingerichtet sein. Zur standard- bzw. herstellerunabhängigen Kommunikation zwischen der Chipkarte 101 und der Datenverarbeitungsvorrichtung 111 ist die Partition 107 vorgesehen, welche als ein Standarddatenlaufwerk an der Datenverarbeitungsvorrichtung 111 angemeldet werden kann. Die Partition 107 kann beispielsweise durch eine Konfigurierung eines definierten, beispielsweise fest adressierbaren, Speicherbereiches des Speichers 103 eingerichtet werden, so dass die Partition 107 bei einer Verbindung zwischen der Chipkarte 101 und der Datenverarbeitungsvorrichtung 111 als Datenlaufwerk erkannt und an der Datenverarbeitungsvorrichtung 111 angemeldet bzw. in ein Datenlaufwerkverzeichnis eingebunden werden kann. Die Datenverarbeitungsvorrichtung 111 kann eine an sich bekannte Autostart-Applikation ausführen, welche es ermöglicht, ausführbare Dateien auf neu erkannten Datenlaufwerken zur Ausführung von Anwendungsprogrammen zu starten. Die Autostart-Applikation kann beispielsweise der Autostart-Applikation entsprechen, welche beispielsweise bei einem an sich bekannten, automatischen Starten von Musikdatenträgern eingesetzt wird.

Gemäß einer Ausführungsform kann die Verbindung zwischen der Chipkarte 101 und der Datenverarbeitungsvorrichtung 111, insbesondere die Verbindung zwischen der Kommunikationsschnittstelle 105 sowie dem Anschluss 113, mittels des PC/SC-Protokolls (Personal Computer Smart Card), signalisiert bzw. erkannt werden. Damit die Datenverarbeitungsvorrichtung 111 erkennt, dass die mit ihr verbundene Chipkarte 101 eine als Datenlaufwerk eingerichtete Partition 107 aufweist, sendet sie beispielsweise eine Anfrage an die Chipkarte 101, um festzustellen, ob diese die Partition 107 aufweist. Hierzu kann der Partition 107 eine feste Adresse oder eine Aliasbezeichnung aufweisen, auf welche sich die Anfrage beziehen kann. Ansprechend auf die Anfrage sendet die Kommunikationsschnittstelle 105 eine Bestätigung in der Gestalt einer Rückantwort aus, welche das Vorhandensein der Partition 107 der Datenverarbeitungsvorrichtung 111 gegenüber bestätigt. Die Bestätigung kann beispielsweise durch die "9000"-Nachricht gemäß dem ISO 7816-Standard erfolgen.

Zum Einbinden der Partition 107 durch die Datenverarbeitungsvorrichtung 111 als physikalisches Datenlaufwerk kann der Partition 107 beispielsweise in Abhängigkeit von einem Betriebssystem, das auf der Datenverarbeitungsvorrichtung 111 abläuft, ein Datenlaufwerksbuchstabe zugeordnet werden. Darüber hinaus kann die Partition 107 beispielsweise in einen Verzeichnisbaum eingehängt ("gemountet") werden. Hierzu kann die Partition 107 durch das Betriebssystem der Datenverarbeitungsvorrichtung 111 beispielsweise mit einer Nummer versehen sein. Der Zugriff auf die als physikalisches Datenlaufwerk eingebundene Partition 107 kann in Abhängigkeit von dem Betriebssystem, das auf der Datenverarbeitungsvorrichtung 111 abläuft, in an sich bekannter Weise erfolgen.

Nach der Einbindung der Partition 107 als physikalisches Datenlaufwerk durch die Datenverarbeitungsvorrichtung 111 kann diese beispielsweise mittels eines Lesezugriffs auf die Partition 107 zugreifen, um beispielsweise die ausführbare Datei 110 auszulesen. Hierzu kann beispielsweise eine an sich bekannte Autostart-Applikation ausgeführt werden, welche auch ein automatisiertes Ausführen einer Anwendung von einem Datenträger ermöglicht.

Die ausführbare Datei 110 kann beispielsweise zu einer Vereinfachung einer Erstinstallation oder eines Updates eines Chipkarten-herstellerspezifischen Treibers beitragen, weil zu deren Ausführung weder ein separater Datenträger mit dem Treiber noch weitere Installationsanweisungen an einen Chipkartenbenutzer benötigt werden. So kann beispielsweise beim Ausführen der ausführbaren Datei 110 eine Kommunikationsverbindung zwischen der Datenverarbeitungsvorrichtung 111 und einem entfernten, in Fig. 1 nicht dargestellten Kommunikationsserver aufgebaut werden. Die Netzwerkadresse des Kommunikationsservers kann beispielsweise als URL (Uniform Resource Locator) durch einen Hersteller der Chipkarte 101 mittels der ausführbaren Datei 110 bereitgestellt werden. Der Kommunikationsserver kann den Treiber selbst zum Download oder Informationen über die Installation sowie über die Quellen zur Beschaffung des Treibers bereitstellen. Je nach Ausprägung der Autostart-Applikationen kann der Verbindungsprozess zu dem Kommunikationsserver zur Installation des Treibers im Umfang der auf der Datenverarbeitungsvorrichtung 111 ablaufenden Prozesses geführt bzw. gesteuert werden.

Gemäß einer Ausführungsform kann die ausführbare Datei jedoch selbst den Treiber umfassen. So kann beim Ausführen der Autostart-Applikation der Treiber beispielsweise dekomprimiert und installiert werden.

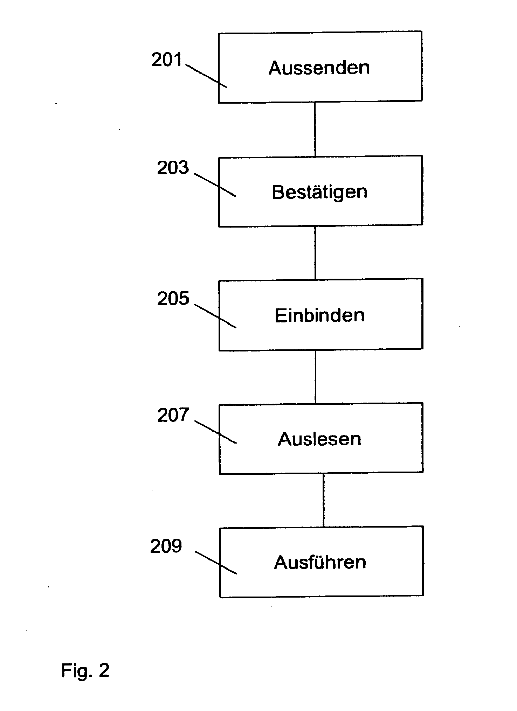

Fig. 2 zeigt ein Ablaufdiagramm eines Verfahrens zum Betreiben einer Chipkarte, beispielsweise der Chipkarte 101 aus Fig. 1, an einer Datenverarbeitungsvorrichtung, beispielsweise an der Datenverarbeitungsvorrichtung 111 aus Fig. 1. Das Verfahren umfasst den Schritt des Aussendens 201 einer Anfrage an die Chipkarte 101 durch die Datenverarbeitungsvorrichtung 111, ob die Chipkarte 101 die Partition 107 aufweist. Das Verfahren umfasst ferner das Aussenden 203 einer Bestätigung von der Chipkarte 101 an die Datenverarbeitungsvorrichtung 111, beispielsweise unter Verwendung der Kommunikationsschnittstelle 105 um das Vorhandensein der Partition 107 zu bestätigen. Danach kann der Schritt des Einbindens 205 der Partition 107 des Speichers 103 der Chipkarte 111 als Datenlaufwerk durch die Datenverarbeitungsvorrichtung 111 erfolgen. Nach dem Einbinden 205 kann der Schritt des Auslesens 207 der ausführbaren Datei 110 aus der Partition 107 des Speichers 103 der Chipkarte 101 durch die Datenverarbeitungsvorrichtung 111 erfolgen. Die ausführbare Datei kann nach dem Auslesen in dem Schritt des Ausführens 209 durch die Datenverarbeitungsvorrichtung 111 ausgeführt werden.

Weitere Verfahrensschritte ergeben sich unmittelbar aus der Funktionalität der in Fig. 1 dargestellten Chipkarte 101, der in Fig. 1 dargestellten Datenverarbeitungsvorrichtung 111 sowie des in Fig. 1 beispielhaft beschriebenen Datenverarbeitungssystems mit der Chipkarte 101 und mit der Datenverarbeitungsvorrichtung 111.

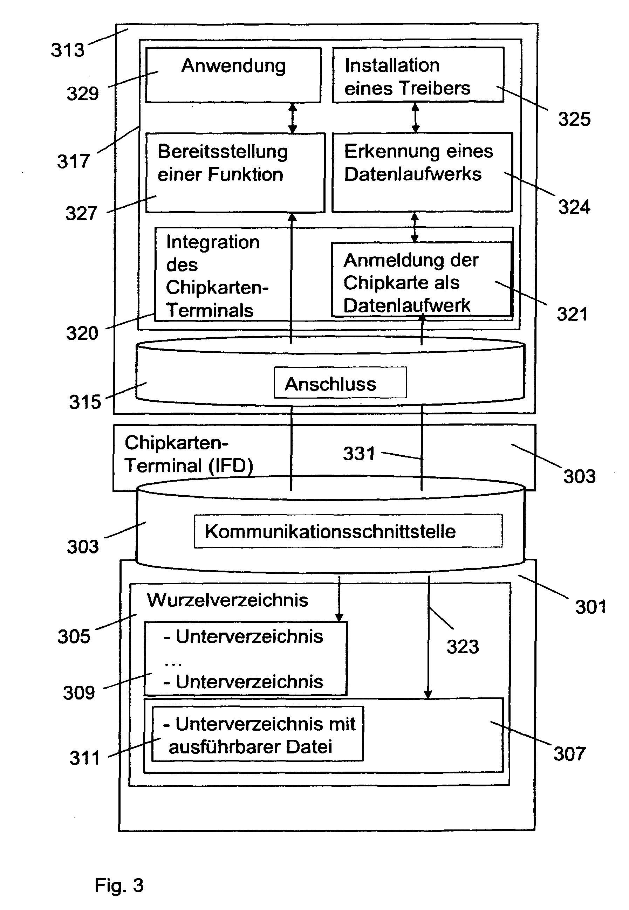

Fig. 3 zeigt eine Chipkarte 301, welche eine Smartcard nach dem ISO 7816-Standard sein kann, mit einer Kommunikationsschnittstelle 303 sowie mit einem Speicher 305, welcher eine Partition 307 aufweist. Der Speicher 305 kann beispielsweise Unterverzeichnisse 309 mit Dateien aufweisen, welche beispielsweise nach dem ISO 7816-Standard eingerichtet sind. Darüber hinaus kann die Partition 307 ein Unterverzeichnis 311 aufweisen.

Fig. 3 zeigt ferner eine Datenverarbeitungsvorrichtung 313 mit einem Anschluss 315, welcher beispielsweise ein USB-Anschluss sein kann. Die Datenverarbeitungsvorrichtung 313 umfasst ferner einen Prozessor 317, welcher beispielsweise programmtechnisch eingerichtet ist, um eine oder mehrere Computerprogramme zur Ausführung von im Folgenden beschriebenen Computerroutinen ablaufen zu lassen.

Zur Anbindung der Chipkarte 301 an die Datenverarbeitungsvorrichtung 313 kann ein Chipkarten-Terminal 319 (IFD: Chip Card Interface Device) vorgesehen sein, das beispielsweise nach dem ISO-Standard 7816 eingerichtet ist. Die Chipkarte 301 ist beispielsweise in das Chipkarten-Terminal 319 einsteckbar. Gemäß einem Ausführungsbeispiel kann das Dateisystem der Chipkarte 301 um das Unterverzeichnis 311 erweitert werden, welches Informationen in der Gestalt von beispielsweise einer ausführbaren Datei bereitstellt, welche eine Erkennung der Partition 307 als Datenlaufwerk durch die Datenverarbeitungsvorrichtung 313 ermöglicht. Hierzu kann der Prozessor 317 eingerichtet sein, eine Computerroutine 320, beispielsweise als Middleware, auszuführen, welche zur Integration des Chipkarten-Terminals 319 sowie der Chipkarte 301 in der Datenverarbeitungsvorrichtung dient. Dies kann beispielsweise über das PC/SC-Protokoll erfolgen. Die Computerroutine 320 kann beispielsweise Chipkartenzugriffe bewirken, welche durch den ISO 7816-Standard festgelegt sind.

Die Computerroutine 320 ist beispielsweise um die Computerroutine 321 erweitert, welche eine Anmeldung der Partition 307 der Chipkarte 301 als Datenlaufwerk an der Datenverarbeitungsvorrichtung 313 bewirkt. Die Computerroutine 321 kann beispielsweise eine Autostart-Applikation sein. Beim Ausführen der Computerroutine 321 findet ein Lesezugriff 323 auf das Unterverzeichnis 311 statt, bei dem die Partition 307 durch die Datenverarbeitungsvorrichtung 313, beispielsweise mittels der Computerroutine 324, als Standarddatenlaufwerk, d.h. als physikalisches Datenlaufwerk, erkannt wird. Hierzu kann die Partition 307 beispielsweise als logisches Datenlaufwerk eingerichtet sein. Die Informationen über die Datenlaufwerkskennung können beispielsweise die zur Erkennung der Partition hilfreichen Informationen wie beispielsweise eine Information über einen Partitionstyp oder eine Partitionstabelle aufweisen.

Nach der Anmeldung der Partition 307 als Datenlaufwerk kann der Prozessor 317 beispielsweise eine Computerroutine 325 zum Auslösen einer Installation eines herstellerspezifischen Treibers aufgrund der Informationen aus der Partition 307 ausführen. Hierbei kann ein Zugriff auf die Partition 307 sowie auf die darin abgelegte, insbesondere ausführbare Datei erfolgen. Die Datei kann beispielsweise eine als URL codierte Netzwerkadresse eines Kommunikationsservers enthalten, welcher beispielsweise einen herstellerspezifischen Treiber zum Betreiben der Chipkarte 301 bereitstellt. Das Unterverzeichnis 311 kann jedoch bereits der Treiber enthalten, welche beispielsweise mittels der Routine 325 ausgeführt, d.h. auf der Datenverarbeitungsvorrichtung 313 installiert werden kann. Die in dem Unterverzeichnis 311 abgelegte ausführbare Datei kann beispielsweise ein Batchfile mit Kommandosequenzen sein, welche insbesondere durch eine automatische Autostart-Applikation ausgeführt werden. Diese Ausführung kann beim Ausführen der Treiberinstallation durch die Routine 325 gestartet werden. Hierbei können auch weitere Informationen und/oder Quellen angezeigt werden, welche über den Inhalt der Partition 307 Auskunft geben.

Zum Ausführen und zur Adaption eines Chipkartenhersteller-spezifischen Treibers an vorhandene Middleware sowie zur Bereitstellung der Chipkartenfunktion wie Verschlüsselung kann der Prozessor eine Computerroutine 327 ausführen. Danach kann der Prozessor 317 beispielsweise eine Computerroutine 329 ausführen, welche eine rechnerseitige Applikation sein kann. Die Applikation kann beispielsweise eine Signatur mittels eines kryptographischen Schlüssels oder eine Überprüfung einer digitalen Identität der Chipkarte umfassen und auf die herstellerspezifische Umsetzung einer Zielapplikation, beispielsweise einer Verschlüsselung, insbesondere mittels des Zugriffs 331, zugreifen.

Gemäß einer Ausführungsform kann die Verwendung der Partition 307 eine automatisierte Bereitstellung herstellerspezifischer Middlewarekomponenten zum regulären Betrieb der Chipkarte 301 ermöglichen.

## Patentansprüche

1. Chipkarte (101, 301) mit einem integrierten Schaltkreis (109), einem Speicher (103, 305) und einer Kommunikationsschnittstelle (105, 303),
**dadurch gekennzeichnet, dass**
der Speicher (103, 305) eine Partition (107, 307) aufweist,
wobei die Partition ein zusammenhängender Speicherbereich ist und als ein über die Kommunikationsschnittstelle (105, 303) beschreibbares und lesbares Datenlaufwerk eingerichtet ist, das als ein Standarddatenlaufwerk an einer Datenverarbeitungsvorrichtung (111) angemeldet werden kann und über die Kommunikationsschnittstelle (105, 303) erreichbar ist,
und die Kommunikationsschnittstelle (105, 303) ausgebildet ist, eine Anfrage zu empfangen, ob die Chipkarte die Partition (107, 307) aufweist
und die Kommunikationsschnittstelle (105, 303) ausgebildet ist, ansprechend auf die empfangene Anfrage eine Bestätigung auszusenden, die das Vorhandensein der Partition (107, 307) bestätigt.

2. Chipkarte (101, 301) nach Anspruch 1, wobei die Partition (107, 307) als ein logisches Datenlaufwerk eingerichtet ist.

3. Chipkarte (101, 301) nach einem der vorstehenden Ansprüche, wobei die Kommunikationsschnittstelle (105, 303) zur Kommunikation, insbesondere zur ISO 7816-konformen Kommunikation, zwischen der Chipkarte (101, 301) und einer externen Datenverarbeitungsvorrichtung vorgesehen ist.

4. Chipkarte (101, 301) nach einem der vorstehenden Ansprüche, wobei die Partition (107, 307) konfigurierbar, insbesondere einrichtbar oder löschbar, ist.

5. Chipkarte nach einem der vorstehenden Ansprüche, welche gemäß dem ISO 7816-Standard eingerichtet ist.

6. Chipkarte nach einem der vorstehenden Ansprüche, wobei die Partition (107, 307) eine ausführbare Datei (110) aufweist, und wobei die Kommunikationssehnittstelle (105, 303) ausgebildet ist, ansprechend auf den Empfang eines Lesezugriffs (323) auf die ausführbare Datei (110), eine Kopie der ausführbaren Datei (110) über die Kommunikationsschnittstelle (105, 303) auszusenden.

7. Verfahren zum Betreiben einer Chipkarte mit einem Speicher und einem integrierten Schaltkreis an einer Datenverarbeitungsvorrichtung,
**gekennzeichnet durch**:
Aussenden (201) einer Anfrage an die Chipkarte (101,301) **durch** die Datenverarbeitungsvorrichtung (111), um festzustellen, ob der Speicher eine Partition aufweist,
wobei die Partition ein zusammenhängender Speicherbereich ist und als ein über die Kommunikationsschnittstelle (105, 303) beschreibbares und lesbares Datenlaufwerk eingerichtet ist, das als ein Standarddatenlaufwerk an einer Datenverarbeitungsvorrichtung (111) angemeldet werden kann.

8. Verfahren nach Anspruch 7, mit:
Aussenden (203) einer Bestätigung von der Chipkarte an die Datenverarbeitungsvorrichtung ansprechend auf die empfangene Anfrage, um das Vorhandensein der Partition der Datenverarbeitungsvorrichtung anzuzeigen.

9. Verfahren nach Anspruch 7 oder 8, mit:
Einbinden (205) einer Partition eines Speichers der Chipkarte als Datenlaufwerk, insbesondere als physikalisches Datenlaufwerk, durch die Datenverarbeitungsvorrichtung.

10. Verfahren nach einem der Ansprüche 7 bis 9, mit:
Auslesen (207) einer ausführbaren Datei aus einer Partition eines Speichers der Chipkarte durch die Datenverarbeitungsvorrichtung; und
Ausführen (209) der ausführbaren Datei durch die Datenverarbeitungsvorrichtung.

11. Computerprogramm, **dadurch gekennzeichnet, dass** das Computerprogramm zum Ausführen des Verfahrens nach einem der Ansprüche 7 bis 9 geeignet ist, wenn das Computerprogramm durch eine Datenverarbeitungsvorrichtung ausgeführt wird.

12. Datenverarbeitungsvorrichtung (111, 313) zur Kommunikation mit der Chipkarte gemäß einem der Ansprüche 1 bis 6, mit:
einem Anschluss (105), mit welchem die Chipkarte verbindbar ist;
**gekennzeichnet durch**
einen Prozessor (115, 317), welcher ausgebildet ist, bei einer Verbindung zwischen der Chipkarte mit dem Anschluss (105) eine Anfrage an die Chipkarte auszusenden, um festzustellen, ob der Speicherbereich der Chipkarte eine Partition aufweist, wobei die Partition ein zusammenhängender Speicherbereich ist und als ein über eine Kommunikationsschnittstelle der Chipkarte (111) beschreibbares und lesbares Datenlaufwerk eingerichtet ist, das als ein Standarddatenlaufinrerk an der Datenverarbeitungsvorrichtung (111) angemeldet werden kann und über die Kommunikationsschnittstelle (105, 303) erreichbar ist.

13. Datenverarbeitungsvorrichtung nach Anspruch 12, wobei der Prozessor (115, 317) ausgebildet ist, die Partition als Datenlaufwerk einzubinden oder auf die Partition zuzugreifen.

14. Datenverarbeitungsvorrichtung nach Anspruch 12 oder 13, welche ausgebildet ist, das Computerprogramm gemäß Anspruch 11 auszuführen.

## Claims

1. Chip card (101,301) having an integrated circuit (109), a memory (103, 305) and a communication interface (105, 303),
**characterized in that**
the memory (103, 305) has a partition (107, 307), wherein the partition is a coherent memory area and is set up as a data drive that is writeable and readable via the communication interface (105, 303) and that can be registered as a standard data drive on a data processing apparatus (111) and can be reached via the communication interface (105, 303),
and the communication interface (105, 303) is configured to receive an enquiry concerning whether the chip card has the partition (107, 307),
and the communication interface (105, 303) is configured to respond to the received enquiry by sending confirmation that confirms the existence of the partition (107, 307).

2. Chip card (101, 301) according to Claim 1, wherein the partition (107, 307) is set up as a logical data drive.

3. Chip card (101, 301) according to either of the preceding claims, wherein the communication interface (105, 303) is provided for communication, particularly for ISO 7816-compliant communication, between the chip card (101, 301) and an external data processing apparatus.

4. Chip card (101, 301) according to one of the preceding claims, wherein the partition (107, 307) is configurable, in particular can be set up or erased.

5. Chip card according to one of the preceding claims, which is set up according to the ISO 7816 standard.

6. Chip card according to one of the preceding claims, wherein the partition (107, 307) has an executable file (110), and wherein the communication interface (105, 303) is configured to respond to the reception of read access (323) to the executable file (110) by sending a copy of the executable file (110) via the communication interface (105, 303).

7. Method for operating a chip card having a memory and an integrated circuit on a data processing apparatus,
**characterized by**:
an enquiry being sent (201) to the chip card (101, 301) by the data processing apparatus (111) in order to establish whether the memory has a partition,
wherein the partition is a coherent memory area and is set up as a data drive that is writeable and readable via the communication interface (105, 303) and that can be registered as a standard data drive on a data processing apparatus (111).

8. Method according to Claim 7, involving:
confirmation being sent (203) from the chip card to the data processing apparatus in response to the received enquiry in order to display the existence of the partition to the data processing apparatus.

9. Method according to Claim 7 or 8, involving:
a partition of a memory of the chip card being incorporated (205) as a data drive, particularly as a physical data drive, by the data processing apparatus.

10. Method according to one of Claims 7 to 9, involving:
an executable file being read (207) from a partition of a memory of the chip card by the data processing apparatus; and
the executable file being executed (209) by the data processing apparatus.

11. Computer program, **characterized in that** the computer program is suitable for carrying out the method according to one of Claims 7 to 9 when the computer program is executed by a data processing apparatus.

12. Data processing apparatus (111, 313) for communication with the chip card according to one of Claims 1 to 6, having:
a port (105) to which the chip card can be connected;
**characterized by**
a processor (115, 317) that is configured to send an enquiry to the chip card in order to establish whether the memory area of the chip card has a partition when the chip card is connected to the port (105), wherein the partition is a coherent memory area and is set up as a data drive that is writeable and readable via a communication interface of the chip card (111) and that can be registered as a standard data drive on the data processing apparatus (111) and can be reached via the communication interface (105, 303).

13. Data processing apparatus according to Claim 12, wherein the processor (115, 317) is configured to incorporate the partition as a data drive or to access the partition.

14. Data processing apparatus according to Claim 12 or 13, which is configured to execute the computer program according to Claim 11.

## Revendications

1. Carte à puce (101, 301), comprenant un circuit intégré (109), une mémoire (103, 305) et une interface de communication (105, 303),
**caractérisée en ce que**
la mémoire (103, 305) présente une partition (107, 307),
la partition étant une zone de mémoire continue et étant configurée sous la forme d'un périphérique de données inscriptible et lisible par le biais de l'interface de communication (105, 303), lequel peut être déclaré en tant que périphérique de données standard auprès d'un dispositif de traitement de données (111) et est joignable par le biais de l'interface de communication (105, 303),
et l'interface de communication (105, 303) est configurée pour recevoir une interrogation destinée à vérifier si la carte à puce présente la partition (107, 307),
et l'interface de communication (105, 303) est configurée pour, en réaction à l'interrogation, envoyer une confirmation qui confirme la présence de la partition (107, 307).

2. Carte à puce (101, 301) selon la revendication 1, dans laquelle la partition (107, 307) est configurée sous la forme d'un périphérique de données logique.

3. Carte à puce (101, 301) selon l'une des revendications précédentes, dans laquelle l'interface de communication (105, 303) est prévue pour la communication, notamment pour une communication conforme à la norme ISO 7816, entre la carte à puce (101, 301) et un dispositif de traitement de données externe.

4. Carte à puce (101, 301) selon l'une des revendications précédentes, dans laquelle la partition (107, 307) est configurable, notamment créable ou effaçable.

5. Carte à puce selon l'une des revendications précédentes, laquelle est configurée conformément à la norme ISO 7816.

6. Carte à puce selon l'une des revendications précédentes, dans laquelle la partition (107, 307) présente un fichier exécutable (110), et dans laquelle l'interface de communication (105, 303) est configurée pour, en réaction à la réception d'un accès en lecture (323) au fichier exécutable (110), envoyer une copie du fichier exécutable (110) par le biais de l'interface de communication (105, 303).

7. Procédé d'utilisation d'une carte à puce comprenant une mémoire et un circuit intégré sur un dispositif de traitement de données,
**caractérisé par** :
émission (201) d'une interrogation à la carte à puce (101, 301) par le dispositif de traitement de données (111) afin de déterminer si la mémoire présente une partition,
la partition étant une zone de mémoire continue et étant configurée sous la forme d'un périphérique de données inscriptible et lisible par le biais de l'interface de communication (105, 303) de la carte à puce, lequel peut être déclaré en tant que périphérique de données standard auprès d'un dispositif de traitement de données (111).

8. Procédé selon la revendication 7, comprenant :
émission (203) d'une confirmation de la carte à puce au dispositif de traitement de données en réaction à l'interrogation reçue afin de signaler la présence de la partition au dispositif de traitement de données.

9. Procédé selon la revendication 7 ou 8, comprenant :
intégration (205) d'une partition d'une mémoire de la carte à puce en tant que périphérique de données, notamment en tant que périphérique de données physique, par le dispositif de traitement de données.

10. Procédé selon l'une des revendications 7 à 9, comprenant :
lecture (207) d'un fichier exécutable depuis une partition d'une mémoire de la carte à puce par le dispositif de traitement de données ; et
exécution (209) du fichier exécutable par le dispositif de traitement de données.

11. Programme informatique, **caractérisé en ce que** le programme informatique est conçu pour mettre en oeuvre le procédé selon l'une des revendications 7 à 9 lorsque le programme informatique est exécuté sur un dispositif de traitement de données.

12. Dispositif de traitement de données (111, 313) destiné à la communication avec la carte à puce selon l'une des revendications 1 à 6, comprenant :
une borne (105) avec laquelle la carte à puce peut être reliée ;
**caractérisé par**
un processeur (115, 317) qui est configuré pour, lors d'une liaison de la carte à puce avec la borne (105), envoyer une interrogation à la carte à puce afin de déterminer si la zone de mémoire de la carte à puce présente une partition, la partition étant une zone de mémoire continue et étant configurée sous la forme d'un périphérique de données inscriptible et lisible par le biais d'une interface de communication de la carte à puce (111), lequel peut être déclaré en tant que périphérique de données standard auprès du dispositif de traitement de données (111) et est joignable par le biais de l'interface de communication (105, 303).

13. Dispositif de traitement de données selon la revendication 12, dans lequel le processeur (115, 317) est configuré pour intégrer la partition en tant que périphérique de données ou pour accéder à la partition.

14. Dispositif de traitement de données selon la revendication 12 ou 13, lequel est configuré pour exécuter le programme informatique selon la revendication 11.
